# EUROPÄISCHE PATENTSCHRIFT

(11) **EP 0 650 566 B1**
(45) Veröffentlichungstag und Bekanntmachung des Hinweises auf die Patenterteilung: **16.10.1996**
(21) Anmeldenummer: 93917605.3
(22) Anmeldetag: 21.07.1993
(51) Int. Cl.: F16H 61/14, F16H 61/06

(54) **HYDRODYNAMISCHER WANDLER MIT EINER ÜBERBRÜCKUNGSKUPPLUNG**
HYDRODYNAMIC CONVERTER WITH A BRIDGING COUPLING
CONVERTISSEUR HYDRODYNAMIQUE AVEC UN DISPOSITIF D'ACCOUPLEMENT EN PONTAGE

(30) Priorität: 24.07.1992 DE 4224472
(43) Veröffentlichungstag der Anmeldung: 03.05.1995
(73) Patentinhaber: ZF FRIEDRICHSHAFEN Aktiengesellschaft, D-88038 Friedrichshafen (DE)
(72) Erfinder: LÖFFLER, Alfons, D-88046 Friedrichshafen (DE); SCHWARZ, Josef, D-88045 Friedrichshafen (DE)
(86) Internationale Anmeldenummer: EP9301925
(87) Internationale Veröffentlichungsnummer: WO9402759

(56) Entgegenhaltungen:
- EP-A- 566 399
- DE-A- 3 433 333
- DE-A- 3 445 743
- DE-A- 3 543 013
- DE-A- 3 818 102
- DE-C- 3 915 186
- FR-A- 2 109 826
- PATENT ABSTRACTS OF JAPAN vol. 013, no. 014 (M-784)13. Januar 1989 & JP, A, 63 227 423 (TOYOTA MOTOR CORPORATION)
- PATENT ABSTRACTS OF JAPAN vol. 015, no 129 (M-1098) 28 März 1991 & JP, A, 03 014 965 (MAZDA MOTOR CORP.) 23. Januar 1991

## Beschreibung

Die Erfindung betrifft einen hydrodynamischen Wandler nach dem Oberbegriff von Anspruch 1.

Ein hydrodynamischer Wandler der genannten Gattung ist durch die DE-C1 39 15 186 bekannt. Vorteilhaft bei dieser Gattung ist es, daß der Wandlerinnendruck nicht abhängig vom Betätigungsdruck der hydraulisch über einen Ringkolben betätigten Überbrückungskupplung ist, sondern der Betätigungsdruck entgegengesetzt zum Wandlerinnendruck auf den Ringkolben wirkt und in Abhängigkeit vom Wandlerinnendruck gesteuert wird, und zwar in der Weise, daß aus dem Wandlerzulaufdruck und Wandlerablaufdruck ein Vergleichssteuerdruck gebildet wird, der auf ein vorgesteuertes Regelventil wirkt. Dieses wird andererseits von einem Kupplungssteuerventil beaufschlagt, das in Abhängigkeit von der Turbinendrehzahl und von der Abtriebsdrehzahl des Getriebes eine gesteuerte Druckmittelleitung mit einer Hauptdruckleitung oder einem Null-Anschluß verbindet. Dadurch fällt der Betätigungsdruck bei geöffneter Überbrückungskupplung auf Null ab.

Um den Ringkolben schnell mit Schließdruck beaufschlagen zu können, ist ein Bypass-Steuerventil vorgesehen, das eine ungedrosselte Verbindung zum Schließdruckraum. am Ringkolben ermöglicht.

Es ist ferner ein hydrodynamischer Wandler anderer Gattung bekannt, DE-C2 31 30 871, bei dem eine Überbrückungskupplung in Schließrichtung vom Wandlerinnendruck beaufschlagt wird. Dieser ist somit gleich dem Schließdruck und damit von diesem abhängig. Der Zulaufdruck des Druckmittels zum Wandler wird in Abhängigkeit vom Ansaugdruck und der Drehzahl einer Antriebsmaschine sowie von der Ausgangsdrehzahl und der Schmieröltemperatur geregelt. Da sich der Wandlerinnendruck mit dem Belastungszustand des Wandlers, der Temperatur und Viskosität ändert sowie von den Fertigungstoleranzen abhängig ist, stellen sich trotz eines gleichen Zulaufdrucks, je nach Betriebsverhältnissen, unterschiedliche Schließdrücke ein.

Ausgehend von diesem Stand der Technik liegt der Erfindung die Aufgabe zugrunde, einen hydrodynamischen Wandler der eingangs beschriebenen Gattung zu schaffen, dessen Überbrückungskupplung bei geringem Energieaufwand schnell und über weite Betriebsbereiche präzise angesteuert werden kann. Sie wird erfindungsgemäß durch die Merkmale des kennzeichnenden Teils in Verbindung mit den Merkmalen des Oberbegriffs von Anspruch 1 gelöst.

Nach der Erfindung wird der Schließdruck der Kupplung nicht auf Null abgesenkt, sondern nur um einen vorgebbaren Betrag, so daß er niedriger ist als der Innendruck des Wandlers und die Kupplung ausreichend öffnet. Dadurch bleibt der Schließdruckraum am Ringkolben mit Druckmittel gefüllt, so daß die Überbrückungskupplung mit geringer Druckmittelzufuhr schnell anspricht, wenn sie wieder zugeschaltet wird. Da der Schließdruck in Abhängigkeit vom Wandlerinnendruck geregelt wird, werden betriebsbedingte Veränderungen sowie Fertigungstoleranzen, die in der Serienfertigung entstehen, berücksichtigt und weitgehend selbsttätig ausgeglichen. Die vorgebbare Druckdifferenz kann durch die Auslegung der Regelfedern bestimmt werden. Sie ist somit nicht von dem veränderlichen Innendruck des Wandlers abhängig.

Da der Wandlerinnendruck als solcher schwer erfaßbar ist, können zur Regelung andere Referenzdrücke verwendet werden, z. B. ein Vergleichssteuerdruck, der aus dem Wandlerzulaufdruck und dem Wandlerablaufdruck gebildet wird oder nur der Ausgangsdruck des Wandlers, der eine gute Näherung ergibt.

Aus Komfortgründen und um Schwingungen zu dämpfen reicht es in vielen Fällen nicht aus, die Überbrückungskupplung bei allen Betriebszuständen mit dem gleichen Schließdruck zuzuschalten. Es wird daher gemäß einer Ausgestaltung der Erfindung vorgeschlagen, daß sowohl der Ausgangsdruck des Wandlers als auch ein in Abhängigkeit von anderen Betriebsparametern modulierter Steuerdruck als Vorsteuerdruck auf das vorgesteuerte Regelventil wirken. Solche Betriebsparameter sind unter anderem z. B. die Motordrehzahl, die Abtriebsdrehzahl, das Antriebsmoment, Betriebsmittel- und Umgebungstemperaturen, die Fahrbahnneigung, Querbewegungen, Lenkeinschlagwinkel, Bremsdruck usw. Selbstverständlich können neben diesen unmittelbaren Betriebsparametern entsprechende gemessene oder berechnete Referenzparameter sowie deren n'te Ableitung nach der Zeit verwendet werden, wobei n eine ganze Zahl zwischen eins und unendlich ist.

Der Ausgangsdruck des Wandlers sorgt als Vorsteuerdruck dafür, daß zwischen dem Schließdruck und dem Innendruck des Wandlers eine für die Öffnungsstellung ausreichende Druckdifferenz besteht, während der von den anderen Betriebsparametern modulierte Steuerdruck den Schließdruck so weit erhöht, bis die Überbrückungskupplung schlupft oder ganz schließt, entsprechend dem Vorliegen der Betriebsparameter.

Als vorgesteuertes Regelventil eignet sich besonders ein Regelventil nach Anspruch 3. Die druckbeaufschlagten Wirkflächen sind mit den Ventilfedern so abgestimmt, daß bei ausgeschalteter Überbrückungskupplung der Schließdruck um einen bestimmten Betrag kleiner als der Ausgangsdruck des Wandlers ist und daß bei Beginn der Drehmomentübertragung der Schließdruck gleich dem Ausgangsdruck des Wandlers ist.

Um den Steuerstrom in Abhängigkeit von anderen Betriebsparametern über einen weiten Betriebsbereich modulieren zu können, ohne daß große Steuerströme entstehen und einen entsprechenden Energieverlust verursachen, ist in einer weiteren Ausgestaltung der Erfindung ein Konstantstromventil vorgesehen, das den Druckmittel strom des modulierten Steuerdrucks konstant auf niedrigem Niveau und somit die Leckverluste gering hält.

In den Ansprüchen sind Merkmalskombinationen zur Lösung der gestellten Aufgabe angegeben. Der Fachmann wird im Hinblick auf die Beschreibung ohne weiteres weitere sinnvolle Kombinationen der Merkmale zur Lösung der gestellten Aufgabe in Betracht ziehen.

In der Zeichnung ist ein Ausführungsbeispiel der Erfindung dargestellt.
Es zeigen:

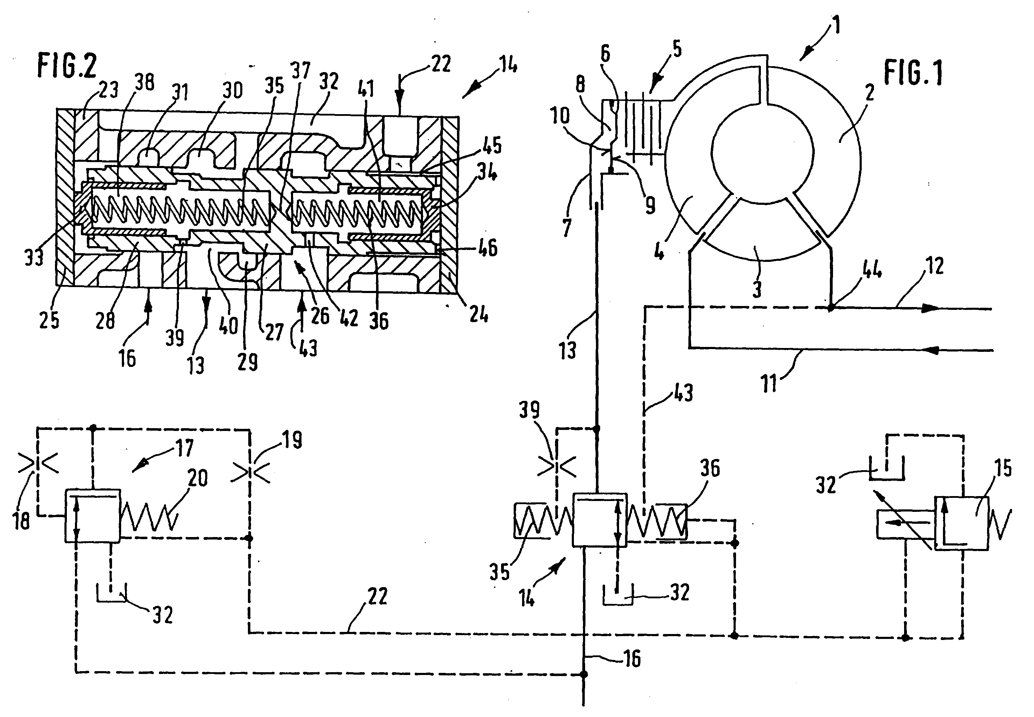

- Fig. 1: den schematischen Aufbau eines hydrodynamischen Wandlers mit der dazugehörenden Ansteuerung;
- Fig. 2: einen Längsschnitt durch ein vorgesteuertes Regelventil nach Fig. 1.

Ein hydrodynamischer Wandler 1 hat eine mit einer nicht näher dargestellten Antriebsmaschine trieblich verbundene Pumpe 2, ein Leitrad 3 und eine Turbine 4. Wandler dieser Bauart sind weit verbreitet und im allgemeinen dem Fachmann bekannt.

Zwischen der Turbine 4 und der Pumpe 2 ist eine Überbrückungskupplung 5 angeordnet, die von einem Ringkolben 6 betätigt wird. Dieser schließt mit einem Pumpengehäuse 7 einen Schließdruckraum 8 ein.

Über eine Zuführleitung 11 und eine Abführleitung 12 wird der Wandler 1 mit Druckmittel versorgt. Entsprechend dem Druck in der Zuführleitung 11 und dem Druck am Ausgang des Wandlers 1, Ausgangsdruck, stellt sich im Wandler 1 in Abhängigkeit von den Betriebsbedingungen, Temperaturen und der Viskosität des Betriebsmittels sowie den Fertigungstoleranzen ein Wandlerinnendruck ein, der auch eine erste Wirkfläche 9 des Ringkolbens 6 beaufschlagt. Über eine Druckleitung 13 wirkt ein Schließdruck auf eine zweite Wirkfläche 10 des Ringkolbens 6. Der Schließdruck wird von einem vorgesteuerten Regelventil 14 in Abhängigkeit vom Ausgangsdruck des Wandlers 1 und eines von anderen Betriebsparametern modulierten Steuerdrucks geregelt, die als Vorsteuerdrücke das Regelventil 14 beaufschlagen. Durch ein elektromagnetisch betätigbares Steuerdruckventil 15, das in üblicher Weise von einer nicht dargestellten elektronischen Auswerteeinheit angesteuert wird, wird der Steuerdruck in Abhängigkeit von Betriebsparametern moduliert. Der Steuerstrom wird von einer Hauptdruckmittelleitung 16 abgezweigt und durch ein Konstantstromventil 17 in üblicher Bauweise konstant gehalten. Das Konstantstromventil 17 enthält eine Dämpfungsdrossel 18 und eine Konstantdrossel 19. Der Druckabfall an der Konstantdrossel 19 wird bestimmt durch eine Regelfeder 20 des Konstantstromventils 17. Durch den konstant geregelten Druckabfall an der Festdrossel 19 ergibt sich ein konstanter Druckmittelstrom in einer Steuerleitung 22, die zum Steuerdruckventil 15 führt.

Das Regelventil 14 umfaßt ein Ventilgehäuse 23 mit Verschlußplatten 24 und 25. In dem Ventilgehäuse 23 ist ein Schieber 26 axial verschiebbar geführt. Der Schieber 26 hat Steuerbünde 27 und 28, die mit Steuernuten 29, 30 und 31 zusammenarbeiten. Die Steuernut 31 steht mit der Hauptdruckmittelleitung 16, die Steuernut 30 mit der Druckmittelleitung 13 zum Schließdruckraum 8 und die Steuernut 29 mit einem Sumpf 32 in Verbindung.

In dem Schieber 26 sind zwei gleiche Kolben 33 und 34 koaxial geführt. Der erste Kolben 33 wird von einer ersten Regelfeder 35 gegen die Verschlußplatte 25 und der zweite Kolben 34 von einer zweiten Regelfeder 36 gegen die Verschlußplatte 24 gedrückt. Eine Wand 37 im Schieber 26 stützt die Regelfedern 35 und 36 ab und trennt ihre Räume voneinander. Der zur ersten Regelfeder 35 gehörende erste Federraum 38 ist über eine Drosselbohrung 39 mit einer Nut 40 zwischen den Steuerbünden 27 und 28 verbunden. Der zur zweiten Regelfeder 36 gehörende zweite Federraum 41 steht über eine Bohrung 42 ständig mit dem Anschluß einer Steuerleitung 43, die zum Ausgang 44 des Wandlers 1 führt, in Verbindung. Der modulierte Druck in der Steuerleitung 22 wirkt über eine Nut 45 im Schieber 26 auf den zweiten Kolben 34, entgegen der zweiten Regelfeder 36 und einer den zweiten Kolben umgebenden Wirkfläche 46 am Schieber 26.

Zu Beginn des Betriebs steht der Schieber 26 in der gezeichneten Stellung, da die erste Regelfeder 35 stärker ausgelegt ist als die zweite Regelfeder 36 und der auf die Stirnflächen wirkende Druck Null oder sehr gering ist. Mit steigendem Druck am Ausgang 44 des Wandlers 1 steigt der Druck im zweiten Federraum 41 und der Schieber 26 wird, entgegen der Kraft der ersten Regelfeder 35, nach links verschoben, so daß über die Nut 40 die Hauptdruckmittelleitung 16 mit der Druckmittelleitung 13 verbunden wird. Dabei wirkt über die Drosselbohrung 39 der Druck der Druckmittelleitung 13 im ersten Federraum 38 auf den Schieber 26. Sind die Wirkflächen in den Federräumen 38 und 39 gleich, schließt der Schieber 26 die Hauptdruckmittelleitung wieder, sobald der Druck in der Druckmittelleitung 13 und die Federkraft der ersten Regelfeder gleich dem Druck am Ausgang 44 des Wandlers 1 plus der Federkraft der zweiten Regelfeder 36 und dem Steuerdruck in der Leitung 22 ist. Der Steuerdruck und die Differenz der Federkräfte der Regelfedern 35 und 36 ergeben einen Differenzdruck, um den der Druck in der Druckleitung 13 geringer ist als in der Steuerleitung 43. Unabhängig davon, wie sich der Ausgangsdruck in Abhängigkeit von der jeweiligen Betriebssituation ändert, bleibt diese Druckdifferenz stets erhalten.

Soll nun die Überbrückungskupplung 6 in Abhängigkeit von weiteren Betriebsparametern geschlossen werden, wird der Schließdruck in der Druckmittelleitung 13 dadurch erhöht, daß durch das Steuerdruckventil 15 der Steuerdruck in der Steuerleitung 22 erhöht wird. Dieser wirkt auf den Schieber 26 in der Weise, daß die Druckmittelleitung 13 so lange mit der Hauptdruckmittelleitung 16 verbunden wird, bis sich ein entsprechend höherer Schließdruck eingestellt hat.

Verringert sich der Druck am Ausgang 44 des Wandlers 1 oder wird der Steuerdruck in der Steuerdruckleitung 22 reduziert, wird die Druckmittelleitung 13 so lange mit dem Sumpf verbunden, bis sich wieder eine gewünschte Druckdifferenz zwischen dem Schließdruck und dem Wandlerinnendruck eingestellt hat. Dadurch ist es möglich, unabhängig von Serienstreuungen in der Fertigung, die Schließkräfte der Überbrückungskupplung 6 in engen Toleranzen zu regeln und mit einfachen Steuermitteln schnell an die jeweiligen Betriebserfordernisse anzupassen. Für die Ansteuerung der Überbrückungskupplung 6 wird nur sehr wenig Druckmittel benötigt, da der Schließdruckraum 8 bei geöffneter Überbrückungskupplung stets gefüllt bleibt und der Schließdruck auf einem vorgebbaren Niveau unter dem Innendruck des Wandlers 1 gehalten wird. Von diesem Niveau aus regelt das Steuerdruckventil 15. Es kann daher für einen kleinen Regelbereich ausgelegt werden, der dem zusätzlich zu regelnden Differenzdruck zwischen dem maximalen und minimalen Schließdruck entspricht.

Erfindungsgemäß wird vorgeschlagen, die Ansteuerung einer Überbrückungskupplung so vorzunehmen, daß der Schließdruck der Kupplung auf einen vorgebbaren Wert abgesenkt wird. Dieser Wert liegt unterhalb einer Schwelle, bei der die Kupplung schließt. Somit ist sichergestellt, daß die Kupplung geöffnet bleibt. Der Schließdruckraum der Kupplung bleibt mit einem vorbestimmten Betrag an Druckmittel gefüllt. Es ist nur ein geringer Betrag an zusätzlichem Druckmittel erforderlich, um den Schließdruck über die Schwelle hinaus zu erhöhen und die Kupplung zu schließen. Die Kupplung kann somit bei einer geringen Druckmittelzufuhr schnell ansprechen.

Eine entsprechende Ansteuerung ist auch für andere Arten von Kupplungen möglich.

Unter Kupplung soll im folgenden jede Art von lösbarer Verbindung verstanden werden, die durch Zuführung von pneumatischem oder hydraulischem Druckmittel geschlossen oder geöffnet werden kann, beispielsweise Schaltkupplungen.

Bei derartigen Kupplungen wird beispielsweise in gleicher Art der Schließdruck gesenkt, wenn die Kupplung geöffnet wird. Entsprechend kann auch der Öffnungsdruck gesenkt werden, wenn die Kupplung geschlossen wird. Im Druckraum für die Kupplungsbetätigung bleibt gerade so viel Druckmittel vorhanden, daß die Kupplung ihren aktuellen Schaltzustand nicht verändert. Es ist sichergestellt, daß der verbleibende Betrag an Druckmittel die Kupplung sicher im aktuellen Schaltzustand hält.

Soll der Schaltzustand der Kupplung geändert werden, so ist nur ein geringer Betrag an weiterem Druckmittel erforderlich, um die Kupplung zu schalten. Dadurch wird ein schnelles Ansprechen der Kupplung erreicht.

## Patentansprüche

1. Hydrodynamischer Wandler (1) mit einer Überbrückungskupplung (5), die von einem Ringkolben (6) betätigt wird, dessen erste Wirkfläche (9) in Öffnungsrichtung vom Innendruck des Wandlers (1) und dessen zweite Wirkfläche (10) in Schließrichtung von einem in einem Schließdruckraum (8) herrschenden Schließdruck beaufschlagt werden, wobei ein vorgesteuertes Regelventil (14) den Schließdruck während des Schließens und im geschlossenen Zustand der Überbrückungskupplung (5) auf einen Wert regelt, der größer als der Innendruck des Wandlers (1) ist, dadurch **gekennzeichnet**, daß das vorgesteuerte Regelventil (14) während der Öffnungsphase der Überbrückungskupplung (5) den Schließdruck um einen vorgebbaren Betrag unter dem Innendruck des Wandlers (1) hält, sodaß der Schließdruckraum (8) bei geöffneter Überbrückungskupplung stets gefüllt bleibt und einen Schließdruck von ungleich Null aufweist.

2. Hydrodynamischer Wandler nach Anspruch 1, dadurch **gekennzeichnet**, daß sowohl der Ausgangsdruck des Wandlers (1) als auch ein in Abhängigkeit von anderen Betriebsparametern modulierter Steuerdruck als Vorsteuerdruck auf das vorgesteuerte Regelventil (14) wirken.

3. Hydrodynamischer Wandler nach Anspruch 1, dadurch **gekennzeichnet**, daß das Regelventil (14) ein Ventilgehäuse (23) umfaßt mit einem Schieber (26) mit Steuerbünden (27, 28), wobei im Schieber (26) zwei gleiche zu dessen Stirnflächen hin federbelastete Kolben (33, 34) koaxial geführt sind, von denen der zweite Kolben (34) stirnseitig vom modulierten Steuerdruck und federseitig vom Ausgangsdruck des Wandlers (1) beaufschlagt ist, wobei die stirnseitig auf den Kolben (34) wirkenden Kräfte stets kleiner als die federseitig auf den Kolben (34) wirkenden Kräfte sind, und von denen der erste Kolben (33) über eine Drosselbohrung (39) vom Schließdruck beaufschlagt und stirnseitig mit einem Sumpf (32) verbunden ist, und wobei die Wirkflächen am Schieber (26) und die Regelfedern (35, 36) so abgestimmt sind, daß beim niedrigsten modulierten Steuerdruck der Innendruck des Wandlers (1) den Schließdruck um einen bestimmten Betrag übersteigt.

4. Hydrodynamischer Wandler nach Anspruch 1, 2 oder 3, dadurch **gekennzeichnet**, daß ein Konstantstromventil (17) den Druckmittelstrom des modulierten Steuerdrucks konstant auf einem vorgebbaren Niveau hält.

## Claims

1. Hydro-dynamic torque converter (1) with a lock-up clutch (5), actuated by an annular piston (6), whose first operating surface (9) is pressurized in opening direction by the inner pressure of the converter (1) and whose second operating face (10) is pressurized in closing direction by a closing pressure existing within a closing pressure chamber (8), whereas a pilot controlled regulating valve (14) regulates both the closing pressure during closing and the pressure of the lock-up clutch (5) in closed condition to give a value which is larger than the inner pressure of the converter (1), characterized in that the pilot controlled regulating valve (14) maintains the closing pressure during the opening phase of the lock-up clutch (5) at a preset pressure below the inner pressure of converter (1), so that the closing pressure chamber (8) remains permanently charged while lock-up clutch is opened and the closing pressure is unequal zero.

2. Hydro-dynamic torque converter according to claim 1, characterized in that both the starting pressure of the torque converter (1) and a modulated control pressure depending on other operating parameters is acting as pilot control pressure on the pilot controlled regulating valve (14).

3. Hydro-dynamic torque converter according to claim 1, characterized in that the regulating valve (14) comprises a valve housing (23) with a valve spool (26) with control collars (27, 28), whereas within the control spool (26) there are two similar spring-loaded pistons (33, 34) coaxially guided towards its faces, of which the second piston (34) is pressurized on its face end by a modulated control pressure and on the spring side by the outlet pressure of the torque converter (1), whereas the forces actuating on the piston (34) from the face end are always smaller than the forces acting on piston (34) on the spring side, and of which the first piston (33) is pressurized via an orifice (39) with the closing pressure and is connected with a sump (32) on the face end, and whereas the actuating faces on the valve spool (26) and the regulating springs (35, 36) are so coordinated, that the inner pressure of the torque converter (1) exceeds the closing pressure at the lowest possible modulated control pressure by a preset amount.

4. Hydro-dynamic torque converter according to claims 1, 2 or 3, characterized in that a constant flow valve (17) retains the pressure agent stream of the modulated control pressure constant at a preset level.

## Revendications

1. Convertisseur hydrodynamique (1) avec embrayage de pontage (5) actionné par un piston annulaire (6) dont la première surface effective (9) est pressurisée dans le sens de l'ouverture par la pression interne du convertisseur (1) et dont la deuxième surface effective (10) est pressurisée dans le sens de la fermeture par une pression de fermeture présente dans une chambre de pression de fermeture (8), sachant qu'une soupape de réglage pilotée (14) règle la valeur de la pression de fermeture au moment et pendant toute la durée de fermeture de l'embrayage de pontage (5), celle-ci étant plus élevée que la pression interne du convertisseur, **caractérisé** en ce que la soupape de réglage pilotée (14) maintient la pression de fermeture à une valeur préconisable sous la pression interne du convertisseur (1) lorsque l'embrayage de pontage (5) est ouvert, si bien que la chambre de pression de fermeture (8) reste toujours remplie lorsque l'embrayage de pontage est ouvert et présente une pression de fermeture différente de zéro.

2. Convertisseur hydrodynamique selon la revendication 1 **caractérisé** en ce que soit la pression de sortie du convertisseur (1), soit une pression de commande modulée, dépendante d'autres paramètres de fonctionnement agissent en tant que pression de pilotage sur la soupape de réglage pilotée (14).

3. Convertisseur hydrodynamique selon la revendication 1 **caractérisé** en ce que la soupape de réglage (14) comprend un carter de soupape (23) comprenant un tiroir (26) avec des colliers de commande (27, 28), sachant que dans le tiroir (26) deux pistons identiques (33, 34) tendus par un ressort sont montés de manière coaxiale vers leurs surfaces frontales; le deuxième piston (34) est pressurisé côté frontal par la pression de commande modulée et côté ressort par la pression de sortie du convertisseur (1), sachant que les forces qui agissent sur le piston (34) côté frontal sont toujours plus faibles que celles qui agissent sur le piston (34) côté ressort, dont le premier piston (33) est pressurisé par la pression de fermeture à travers d' un orifice (39) et est relié à un carter (32) côté frontal, les surfaces effectives étant réglées dans le tiroir (26) et les ressorts de régulation (35, 36) de manière à ce que la pression intérieure du convertisseur (1) dépasse la pression de fermeture d'une certaine valeur lorsque la pression de commande modulée est au plus faible.

4. Convertisseur hydrodynamique selon les revendications 1, 2, ou 3, **caractérisé** en ce qu'une valve de débit constant (17) maintient le débit du fluide de pression de la pression de commande modulée à une valeur préconisable constante.
